Europäisches Patentamt

European Patent Office

Office européen des brevets

(19)

(11) **EP 0 794 263 B1**

(12) **EUROPÄISCHE PATENTSCHRIFT**

(45) Veröffentlichungstag und Bekanntmachung des Hinweises auf die Patenterteilung:
**25.04.2001 Patentblatt 2001/17**

(51) Int Cl.[7]: **C21D 1/76**

(21) Anmeldenummer: **96109800.1**

(22) Anmeldetag: **18.06.1996**

(54) **Verfahren zur Schutzgasversorgung eines Wärmebehandlungsofens und Wärmebehandlungsanlage**

Method for producing a protective atmosphere for heat treatment furnace and heat treatment apparatus

Procédé pour la production d'une atmosphère protectrice pour four de traitement thermique et installation pour traitement thermique

(84) Benannte Vertragsstaaten:
**AT DE ES FR GB IT**

(30) Priorität: **07.03.1996 DE 19608894**

(43) Veröffentlichungstag der Anmeldung:
**10.09.1997 Patentblatt 1997/37**

(73) Patentinhaber: **Linde Gas Aktiengesellschaft
82049 Höllriegelskreuth (DE)**

(72) Erfinder: **Strigl, Reinhard, Dipl.-Ing.
80995 München (DE)**

(74) Vertreter: **Kasseckert, Rainer et al
Linde AG
Zentrale Patentabteilung
Dr.-Carl-von-Linde-Strasse 6-14
82049 Höllriegelskreuth (DE)**

(56) Entgegenhaltungen:
**EP-A- 0 541 006       EP-A- 0 603 799
WO-A-93/21350       DE-A- 4 336 771**

**Beschreibung**

Die Erfindung betrifft ein Verfahren zur Schutzgasversorgung eines Wärmebehandlungsofens mit gegfs. mehreren Kammern oder Zonen, z.B. einer Einlauf- und einer Auslaufzone sowie einer Heizzone, bei dem die Heizung durch Verbrennen von Kohlenwasserstoffgas in Heizeinrichtungen, insbesondere Strahlrohren, bewerkstelligt wird und Schutzgas für die Wärmebehandlung unter Verwendung des Kohlendioxidanteils der Verbrennungsabgase gewonnen wird, wobei hierzu Kohlendioxid aus den Verbrennungsabgasen abgetrennt wird, mit kohlenwasserstoffhaltigem Gas gemischt wird und dieses Gemisch in ein schutzgastaugliches CO- und $H_2$-haltiges Gasgemisch umgesetzt und dem Ofen zugeführt wird. Ebenso bezieht sich die Erfindung auf eine entsprechende Wärmebehandlungsanlage.

Grundsätzlich ist es bekannt, CO- und $H_2$-haltige Schutz- oder Reaktionsgase für Wärmebehandlungen aus Luft und einem Kohlenwasserstoffgas (KW-Gas), insbesondere Erdgas, und mittels katalytischer Umsetzung der reaktiven Bestandteile, nämlich Sauerstoff und beispielsweise Methan, zu bilden. Die typische Bildungsreaktion, die eine unvollständige Verbrennung des KW-Gases darstellt, lautet hierbei wie folgt:

$$(O_2 + 4\,N_2) + 2\,CH_4 \longrightarrow 2\,CO + 4\,H_2 + 4\,N_2 = \text{Luft}$$

Diese Reaktion wird üblicherweise mit einem neben dem oder den Wärmebehandlungsöfen angeordneten, im Kernstück aus einem Katalysator bestehenden Gasgenerator bewerkstelligt, und das im Generator gebildete, sogenannte Endogas wird im Regelfall ohne weitere Behandlung der zugehörigen Wärmebehandlungsanlage zugeführt. Ebenso ist es bekannt, das gleiche Ausgangsgasgemisch in einer in einem Ofen angeordneten und auf diese Weise bereits auf ein höheres Temperaturniveau versetzten Katalysatorretorte umzusetzen und das Produktgas entweder direkt in den Ofen einfließen zu lassen oder auch abzuziehen und zu verteilen (siehe z.B. DE 39 42 810 A1).

Außerdem ist es auch bekannt, CO- und $H_2$-haltige Schutz- oder Reaktionsgase für Wärmebehandlungen und insbesondere Aufkohlungen aus Kohlendioxid und wiederum einem Kohlenwasserstoffgas (KW-Gas) zu bilden. In aller Regel ist auch hier die Schutzgasbildung durch eine Katalysatoreinheit zu unterstützen. Die typische Bildungsreaktion für die Schutzgasbereitstellung auf $CO_2$-Basis lautet

$$2\,CO_2 + 2\,CH_4 \longrightarrow 4\,CO + 4\,H_2.$$

Es wird auf diese Weise also ein etwa gleiche Anteile CO und $H_2$ enthaltendes Behandlungsgas erhalten, das speziell für Aufkohlungen besondere Vorteile - z.B. hohe Kohlenstoffübergangszahl - aufweist (siehe DE 43 43 927 C1 oder DE-OS 20 00 060).

In Verbindung mit der Möglichkeit $CO_2$ zur Behandlungsgasbildung heranzuziehen, ist es darüber hinaus bereits bekannt, das bei der Beheizung von Wärmebehandlungseinrichtungen anfallende Verbrennungsabgas als Ausgangsbasis für die Behandlungsatmosphäre anzuwenden und damit außerdem die Abgas-Emission der Wärmebehandlung zu reduzieren. In diesem Falle ist also das in den Verbrennungsabgasen enthaltene $CO_2$ mit möglichst hoher Reinheit abzutrennen und mit einem Kohlenwasserstoffgas in ein Behandlungsgas umzusetzen (siehe hierzu DE 43 18 400 C1).

Eine Schwierigkeit bei diesem Vorgehen besteht darin, den dazu notwendigen Aufwand in einem akzeptablen Bereich zu halten und hierbei insbesondere die Gewinnung des Kohlendioxids aus den Verbrennungsabgasen möglichst einfach und effizient sowie kostengünstig zu lösen. Eben diese **Aufgabenstellung** liegt auch der vorliegenden Erfindung zugrunde. In der DE 43 18 400 C1 ist hierzu beispielsweise vorgeschlagen, die $CO_2$-Abtrennung mittels Druckwechseladsorption durchzuführen, mit dem gewonnenen $CO_2$-reichen Gas und Erdgas ein Aufkohlungsgas zu generieren und die neben dem $CO_2$-Gas anfallende, $CO_2$-arme Gasfraktion in einem weiteren Wärmebehandlungsofen in Verbindung mit Ammoniak zum Nitrokarburieren anzuwenden.

Besagte Aufgabenstellung wird demgegenüber gemäß vorliegender Erfindung dadurch gelöst, daß die Trennung des Verbrennungsabgases in eine kohlendioxidreiche und in eine überwiegend Stickstoff enthaltende Gasfraktion mit einer Membrantrennanlage (siehe dazu z.B. DE-OS 41 10 361) durchgeführt wird, wobei dieser Abtrennung eine Gaskühlung und eine Kompression derart vorausgeschaltet wird, daß der Wasserdampfanteil im Abgas vorab entfernt wird, und daß die bei der Abtrennung entstehende, überwiegend Stickstoff enthaltende Gas-fraktion mit mehr als 95 %iger Reinheit hergestellt wird und ebenfalls im gleichen Ofen als Schutzgas verwendet wird, wobei dieses Stickstoff-Schutzgas mit Abstand vom generierten Schutzgas zugeführt wird, vorzugsweise in die Einlauf- und gegfs. die Auslaufzone des Ofens eingeleitet wird. Mit Membran-Gastrennanlagen kann ein problemloser kontinuierlicher Betrieb als mit Adsorptionsanlagen durchgeführt werden, der zudem in der beschriebenen Weise ausreichende Gasreinheiten liefert.

Zu bevorzugen ist eine Komponentenauswahl und Verfahrensgestaltung derart, daß die überwiegend Stickstoff enthaltende Gasfraktion mit einer Reinheit von wenigstens 98 % und die $CO_2$-reiche Gas-Fraktion mit zumindest 25 % $CO_2$-Gehalt erhalten wird.

Eine besonders günstige Ausgestaltung des erfindungsgemäßen Vorgehens ist dadurch gekennzeichnet, daß die $CO_2$-reiche - jedoch immer noch überwiegend Stickstoff enthaltende - Gasfraktion mit einer im Wärmebehandlungsofen angeordneten Katalysatorretorte umgesetzt wird, wozu die Retorte auf einer Temperatur von über 800 °C, vorzugsweise um etwa 1000°C, zu halten ist. Besondere Vorteile werden erzielt, wenn die Retorte dabei über eine innenliegende Zusatzbeheizung verfügt, da dann die Retortentemperatur auch unabhängig von der Ofentemperatur variiert und auch über dem Ofentemperatumivau eingestellt werden kann.

Eine erfindungsgemäße Wärmebehandlungsanlage weist zunächst einen Ofen mit einer Behandlungskammer mit Heizzone und gasbetriebenen Heizeinrichtungen, sowie eine Gastrenneinrichtung und ein Umsetzungsaggregat für $CO_2$ mit einem Kohlenwasserstoffgas auf und ist insbesondere dadurch gekennzeichnet, daß der Abgasausgang der Heizeinrichtungen (H) über eine Wasserabscheidevorrichtung (7) mit einer membran-Gastrenneinrichtung (1) verbunden ist,

daß der Permeatausgang (P) der Gastrenneinrichtung, der die $CO_2$-reiche Gasfraktion liefert, mit dem Umsetzungsaggregat (2) in Verbindung steht und das Umsetzungsaggregat außerdem an eine Kohlenwasserstoffgasquelle (CnHm) angeschlossen ist und über Vorkehrungen zur Weiterleitung des Produktgases an die Behandlungskammer (3,5,8) der Anlage verfügt, und

daß andererseits der Retentatausgang (R) der Membran-Gastrenneinrichtung, der die überwiegend Stickstoff enthaltende Gas-Fraktion ($N_{2+}$) liefert, ebenfalls mit der Behandlungskammer der Anlage verbunden ist, wobei die Einleitung in die Behandlungskammer mit Abstand von der Produktgaseinleitung ausgeführt ist.

Im Falle von Öfen mit mehren Kammern oder Zonen, z.B. bei Vorkammer- oder Durchlauföfen, wird die überwiegend Stickstoff enthaltende Gas-Fraktion mit besonderen Vorteilen in die Einlauf- und gegebenenfalls die Auslaufkammer oder -zone des jeweiligen Ofens eingeleitet, anlagenseitig sind also dementsprechende Leitungsverbindungen vorzusehen. Dies hat zur Folge, daß in der eigentlichen Behandlungszone oder -kammer der Öfen der reaktivere Schutzgasanteil, nämlich der aus dem Kohlendioxid gebildete Schutzgas-Anteil, das Übergewicht hat und somit dort gegebenenfalls gewünschte chemische Prozesse beschleunigt ablaufen. Andererseits ist das für die Vorkammern vorgesehene Stickstoff-Schutzgas für die dortigen Zwecke durchaus geeignet und muß dort zudem nicht auf Temperaturen, wie sie in der Behandlungszone erforderlich sind, aufgeheizt werden.

Anhand der anliegenden Figur wird im folgenden ein Ausführungsbeispiel der Erfindung näher beschrieben.

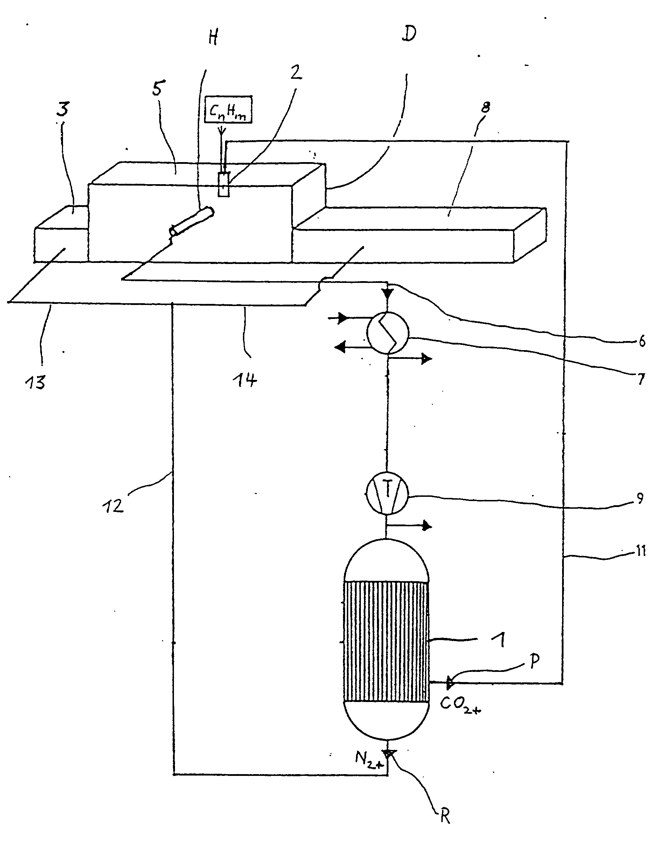

Die Figur zeigt einen länglich ausgebildeten Durchlaufofen D mit einer Eintrittszone 3, einer mittig liegenden Heiz- und Behandlungszone 5 und einer Kühlzone 8. In der Heizzone 5 ist im Ofeninneren im Deckenbereich eine Katalysatorretorte 2, also ein ein Katalysatormaterial enthaltendes Aggregat, das an seinem Kopfende Gasauslaßöffnungen aufweist, angeordnet, wobei diese Retorte 2 einerseits über eine Gasleitung 11 mit einer auf Membranbasis arbeitenden, also nach dem Permeationsprinzip funktionierenden, Gastrenneinrichtung 1 und deren Permeatausgang P in Verbindung steht und andererseits mit einer Kohlenwasserstoffquelle CnHm verbunden ist. Der Retentatausgang der Gastrenneinrichtung 1, also derjenige der bei $N_2$/ $CO_2$-Gasmischungen das stickstoffreichere Gas abgibt, ist, wie erfindungsgemäß verlangt, über Leitungen 12, 13 und 14 wieder mit dem Wärmebehandlungsofen D verbunden, wobei die Gasleitungen jedoch spezifisch in die Ofeneinlaufzone 3 - Leitung 13 - und in die Ofenauslaufzone 8 - Leitung 14 - münden. In die Heiz- und Behandlungszone 5 des Wärmebehandlungsofens wird im gezeigten Beispiel kein, unmittelbar vom Stickstoffausgang der Gastrenneinrichtung stammendes, nicht weiter behandeltes Stickstoffgas eingeleitet. Die Gastrenneinrichtung 1 ist andererseits mit ihrem Eingang mit der Abgasleitung 6 der Heiz-Strahlrohre H des Durchlaufofens verbunden, wobei in dieser Verbindung außerdem ein Kühler und Wasserabscheider 7 sowie ein Kompressor 9 angeordnet ist.

Ein erfindungsgemäßer Betrieb der gezeigten Anlage verläuft nunmehr wie folgt:

Der Schutzgasbedarf des gezeigten Durchlaufofens D soll beispielsweise 150 m$^3$/h betragen. Als Ausgangsgas für die Ofenatmosphäre dient das Abgas der Strahlrohre H, von denen üblicherweise eine Mehrzahl für eine ausreichende Ofenbeheizung erforderlich sind. Das Strahlrohrabgas wird zunächst gegfs. unter Zuhilfenahme eines Gebläses zum wassergekühlten Kühler und Wasserabscheider 7 befördert, wo ein Hauptteil des enthaltenen Wasserdampfes durch Kondensation abgeschieden wird. Nach dem Kühler 7 fließt das nunmehr im wesentlichen $CO_2$ und Stickstoff enthaltende Gasgemisch (12 % $CO_2$, 87 % $N_2$, + Restfeuchte) dem Kompressor 9 zu, der den Druck auf ein für das folgende Membranmodul geeignetes Arbeitsniveau von 5 bis 10 bar anhebt und dabei außerdem weitere Feuchtigkeit aus dem Gasgemisch entfernt. Grundsätzlich wird bei der vorausgesetzten Bedarfsmenge von 150 cbm/h eine solche Abgasmenge herangezogen, daß passende Produktmengen entstehen - im vorliegenden Fall wird beispielsweise aus ca.156 cbm Abgas 128 cbm entfeuchtetes Zwischenprodukt gewonnen, aus dem schließlich etwa 107 cbm Retentat und 20,7 cbm Permeat zur Verfügung gestellt werden (alle Mengenangaben verstehen sich in bezug auf Standardbedingungen). Die aus einem Membranmodul bestehende Gastrenneinrichtung 1 ist im vorliegenden Beispiel so gewählt, daß bei den genannten Gasmengen und -mischungen ein Stickstoffretentat mit etwa 99 %-iger Reinheit und ein Permeat mit einem etwa 36 % betragenden $CO_2$-Anteil geliefert wird.

Das Retentat, also das 99%-Stickstoffgas, wird beispielgemäß - ohne daraus weitere Verunreinigungen, insbesondere $CO_2$, zu entfernen - in einer Quantität von jeweils 53,5 m$^3$/h der Einlaufzone und der Auslaufzone des Durchlaufofens D zugeführt. Von dort aus verteilt sich der Stickstoff allerdings auch in Richtung Heizzone 5, wobei die für die Heizzone des Ofens nominell noch erforderliche Schutzgasmenge von 43 $m^3$ pro Stunde von der Katalysatorretorte 2 geliefert wird. In der Katalysatorretorte 2, die beispielsweise Nikkel oder Edelmetalle als Katalysatormaterial enthalten kann, werden aus den etwa 20,7 cbm Permeat, das zu etwa 36 % $CO_2$ und ansonsten Stickstoff enthält, unter Hinzufügung von weiteren 7,5 cbm Methan gemäß

$$CO_2 + CH_4 + 2 N_2 \; \text{-->} \; 2 CO + 2 H_2 + 2 N_2$$

43 cbm Schutzgas gewonnen. Der in dieser Weise gebildete Schutzgasanteil stellt ein hochreaktives Schutzgas mit etwa 35 % CO und 35% $H_2$ - Rest Stickstoff - dar, das speziell im zentralen Bereich einer Wärmebehandlungsanlage, in dem bei größter Hitze die gewünschten Prozesse ablaufen sollen, besonders vorteilhaft plaziert ist.

Damit eine möglichst hochwertige und vollständige Umsetzung der Ausgangstoffe $CO_2$ und Methan (alternativ bevorzugt auch Propan) in der beschriebenen Weise erzielt wird, muß die Katalysatoreinheit 2 bevorzugt in einem Temperaturbereich von 900 bis 1050 °C gehalten werden. Hierzu ist es vorteilhaft, wenn die Katalysatoreinheit 2 über die Wärmezufuhr aus dem Ofen hinaus über eine weitere, möglichst variierbare Wärmezufuhrmöglichkeit verfügt. Diese wird sehr vorteilhaft durch einen oder mehrere, in die Retorte integrierte Brenner realisiert, die nicht zu dicke Schichten aus Katalysatormaterial möglichst mehrseitig beheizen. Aufgrund der Einspeisung einerseits von Stickstoff und andererseits eines $CO/H_2/N_2$-Gasgemisches entsteht im Ofen ein in Längsrichtung des Ofens variierendes Misch-Schutzgas, das speziell in der Heizzone besonders hohe Anteile an CO und $H_2$ aufweist, die jedoch aufgrund der Verdünnung mit Stickstoff auch dort im allgemeinen unterhalb von 20 % verbleiben. Damit ist außerdem auch ein verpuffungssicherer Ofenbetrieb gewährleistet.

Wie nunmehr ersichtlich ist, wird mit dem erfindungsgemäßen Vorschlag eine Schutzgasversorgung einer Wärmebehandlungsanlage erreicht, die Brenner-Abgase zur Schutzgasgewinnung ausnutzt, wobei dies unter geschickter Anwendung der vergleichsweise unkomplizierten Gastrennung nach dem Permeationsprinzip erfolgt. Außerdem wird erfindungsgemäß sowohl Permeat als auch Retentat zur Schutzgasbildung in ein und dem selben Ofen herangezogen, wodurch ein sich immer schwierig gestaltender, paralleler Ofenbetrieb vermieden wird.

**Patentansprüche**

**1.** Verfahren zur Schutzgasversorgung eines Wärmebehandlungsofens mit gegebenenfalls mehreren Kammern oder Zonen, z.B. einer Einlauf- und Auslaufzone und jedenfalls einer Behandlungszone,

bei dem die Wärme durch Verbrennen von Kohlenwasserstoffgas in Heizeinrichtungen, insbesondere Strahlrohren, erzeugt wird und Schutzgas für die Wärmebehandlung unter Verwendung des Kohlendioxidanteils der Verbrennungsabgase gewonnen wird, wozu Kohlendioxid aus dem Abgas abgetrennt wird, mit kohlenwasserstoffhaltigem Gas zusammengebracht und in eine schutzgastaugliche Produktgasmischung umgesetzt wird und dieses Produktgas dem Ofen zugeführt wird, **dadurch gekennzeichnet,** daß die Trennung des Verbrennungsabgases in eine kohlendioxidreiche und in eine überwiegend Stickstoff enthaltende Gasfraktion mit einer Membrangastrennanlage durchgeführt wird, wobei dieser Abtrennung eine Gaskühlung und eine Kompression derart vorausgeschaltet wird, daß der Wasserdampfanteil im Abgas vorab entfernt wird, und daß die bei der Abtrennung entstehende, überwiegend Stickstoff enthaltende Gasfraktion mit mehr als 95 % Reinheit hergestellt wird und im gleichen Wärmebehandlungsofen ebenfalls als Schutzgas verwendet wird, wobei dieses Stickstoff-Schutzgas mit Abstand zum generierten Produktgas in den Ofen eingeleitet wird, insbesondere bei Vorhandensein mehrerer Ofenzonen als Schutzgas in die Einlauf- und gegfs. die Auslaufzone des Ofens eingeleitet wird.

**2.** Verfahren nach Anspruch 1, **dadurch gekennzeichnet,** daß die Gastrennung so eingestellt wird, daß die überwiegend Stickstoff enthaltende Gasfraktion zumindest 98 % Stickstoff, Rest überwiegend $CO_2$, und die kohlendioxidreiche Gasfraktion zumindest 25 % Kohlendioxid aufweist und mit letztgenannter Fraktion eine zum kohlungsneutralen Glühen besonders geeignete Atmosphäre durch Umsetzung mit einem Kohlenwasserstoffgas hergestellt wird.

**3.** Verfahren nach einem der Ansprüche 1 bis 2, **dadurch gekennzeichnet,** daß die Wasserabtrennung aus dem Abgas durch entsprechende Abkühlung mittels indirektem Wärmetausch mit Tröpfchenabscheidung und/oder durch einen oder mehrere, vor der Membrangastrennanlage angeordnete, entsprechend eingestellte Kompressoren erzielt wird.

**4.** Verfahren nach einem der Ansprüche 1 bis 3, **dadurch gekennzeichnet,** daß der $CO_2$-Anteil in der

kohlendioxidreichen Gasfraktion mittels einer externen Kohlendioxdquelle vor der Umsetzung erhöht wird und so bessere Umsetzungsbedingungen erzielt werden.

5. Verfahren nach einem der Ansprüche 1 bis 4, **dadurch gekennzeichnet,** daß die $CO_2$-reiche Gasfraktion mit dem Kohlenwasserstoffgas in einer im Wärmebehandlungsofen angeordneten Katalysatorretorte umgesetzt wird und die Retorte auf einer Temperatur von über 800 °C, vorzugsweise um 1000 °C, gehalten wird, wozu die Retorte vorzugsweise zusätzlich beheizt wird.

6. Wärmebehandlungsanlage mit einem Ofen (D) mit einer Behandlungskammer (3,5,8) mit Heizzone und Heizeinrichtung(en) sowie mit einer Schutzgasversorgung, die eine Gastrenneinrichtung (1) und ein Umsetzungsaggregat (2) für $CO_2$ mit einem Kohlenwasserstoffgas umfaßt, **dadurch gekennzeichnet,**

   daß der Abgasausgang der Heizeinrichtungen (H) über eine Wasserabscheide-einrichtung (en) (7) mit einer Membran-Gastrenneinrichtung (1) verbunden ist,
   daß der Permeatausgang (P) der Gastrenneinrichtung, der die $CO_2$-reiche Gas-fraktion liefert, mit dem Umsetzungsaggregat (2) in Verbindung steht und das Umsetzungsaggregat außerdem an eine Kohlenwasserstoffgasquelle (CnHm) angeschlossen ist und über Vorkehrungen zur Weiterleitung des Produktgases an die Behandlungskammer (3, 5, 8) der Anlage verfügt, und
   daß andererseits der Retentatausgang (R) der Membran-Gastrenneinrichtung, der die überwiegend Stickstoff enthaltende Gas-Fraktion liefert, ebenfalls mit der Behandlungskammer (3, 5, 8) der Anlage verbunden ist, wobei die Einleitung in die Behandlungskammer mit Abstand von der Produktgaseinleitung ausgeführt ist.

7. Wärmebehandlungsanlage nach Anspruch 6, mit einem Ofen mit mehren Kammern oder Zonen, **dadurch gekennzeichnet,** daß der Retentatausgang (R) der Membran-Gastrenneinrichtung mit der Einlauf- und gegebenenfalls der Auslaufkammer oder -zone (3,8) des Ofens verbunden ist, während der Ausgang des Umsetzungsaggregats (2) mit der Hauptkammer oder Heizzone (5) des Ofens verbunden ist.

8. Wärmebehandlungsanlage nach Anspruch 6 oder 7, **dadurch gekennzeichnet,** daß das Umsetzungsaggregats (2) eine Katalysatorretorte ist, die in der Heizzone (5) des Ofens angeordnet ist und die über eine Zusatzheizung verfügt.

## Claims

1. Method for supplying protective gas to a heattreatment furnace having, if appropriate, a plurality of chambers or zones, for example an intake zone and an exit zone, and in all cases a treatment zone,
   in which the heat is generated by burning hydrocarbon gas in heating devices, in particular radiant tubes, and protective gas is produced for the heat treatment using the carbon dioxide fraction of the combustion exhaust gases,
   for which purpose carbon dioxide is separated off from the exhaust gas, combined with hydrocarbon-containing gas and converted into a product gas mixture which is suitable as protective gas and this product gas is fed to the furnace,
   characterized in that the combustion exhaust gas is separated by a membrane gas separation unit into a carbon-dioxide-rich gas fraction and a gas fraction predominantly comprising nitrogen, gas cooling and compression being connected in advance of this separation in such a manner that the water vapour fraction in the exhaust gas is removed in advance,
   and in that the gas fraction predominantly comprising nitrogen formed in the separation is produced at more than 95% purity and also used as protective gas in the same heat treatment furnace,
   this nitrogen protective gas being introduced into the furnace at a distance from the product gas generated, in particular when a plurality of furnace zones are present, being introduced as protective gas into the intake zone and if appropriate the exit zone of the furnace.

2. Method according to Claim 1, characterized in that the gas separation is set so that the gas fraction which predominantly comprises nitrogen has at least 98% nitrogen, the remainder predominantly $CO_2$, and the carbon-dioxide-rich gas fraction has at least 25% carbon dioxide, and, using the last-mentioned fraction, an atmosphere particularly suitable for carburizationneutral annealing is produced by reaction with a hydrocarbon gas.

3. Method according to one of Claims 1 to 2, characterized in that the water is removed from the exhaust gas by appropriate cooling using indirect heat exchange with demisting and/or by one or more appropriately set compressors disposed upstream of the membrane gas separation unit.

4. Method according to one of Claims 1 to 3, characterized in that the $CO_2$ content is increased in the carbon-dioxide-rich gas fraction by means of an external carbon dioxide source upstream of the reaction and thus better reaction conditions are achieved.

5.  Method according to one of Claims 1 to 4, characterized in that the $CO_2$-rich gas fraction is reacted with the hydrocarbon gas in a catalyst retort disposed in the heat treatment furnace and the retort is kept at a temperature of above 800°C, preferably 1000°C, for which purpose the retort is preferably additionally heated.

6.  Heat treatment unit having a furnace (D) having a treatment chamber (3, 5, 8) having a heating zone and heating device(s) and having a protective gas supply which comprises a gas separation device (1) and a reaction unit (2) for reacting $CO_2$ with a hydrocarbon gas, characterized
    in that the exhaust gas exit of the heating devices (H) is connected via a water separation device(s) (7) to a membrane gas separation device (1), in that the permeate exit (P) of the gas separation device which delivers the $CO_2$-rich gas fraction is connected to the reaction unit (2) and the reaction unit is also connected to a hydrocarbon gas source (Cn-Hm) and is provided with means for passing on the product gas to the treatment chamber (3, 5, 8) of the system, and
    in that, on the other hand, the retentate exit (R) of the membrane gas separation device which delivers the gas fraction predominantly comprising nitrogen is also connected to the treatment chamber (3, 5, 8) of the system, the introduction into the treatment chamber being carried out at a distance from the product gas introduction.

7.  Heat treatment system according to Claim 6, having a furnace having a plurality of chambers or zones, characterized in that the retentate exit (R) of the membrane gas separation device is connected to the intake chamber or zone and if appropriate the exit chamber or zone (3, 8) of the furnace, while the exit of the reaction unit (2) is connected to the main chamber or heating zone (5) of the furnace.

8.  Heat treatment system according to Claim 6 or 7, characterized in that the reaction system (2) is a catalyst retort which is disposed in the heating zone (5) of the furnace and which is provided with additional heating.

## Revendications

1.  Procédé pour l'alimentation en gaz protecteur d'un four de traitement thermique comprenant le cas échéant plusieurs chambres ou zones, par exemple une zone d'entrée et une zone de sortie et dans tous les cas une zone de traitement,

    dans lequel la chaleur est obtenue par la combustion de gaz d'hydrocarbures dans des dispositifs de chauffage, en particulier des tubes de rayonnement, et dans lequel le gaz protecteur pour le traitement thermique est produit avec utilisation de la proportion en dioxyde de carbone des gaz d'échappement de combustion,
    le dioxyde de carbone étant dans ce but séparé du gaz d'échappement, réuni avec du gaz contenant des hydrocarbures et transformé en un mélange gaz produit convenant comme gaz protecteur et ce gaz produit étant dans ce but amené au four,
    caractérisé en ce que la séparation du gaz d'échappement de combustion en une fraction gazeuse riche en dioxyde de carbone et en une fraction gazeuse contenant essentiellement de l'azote est réalisée au moyen d'une installation de séparation de gaz par membrane, cette séparation étant précédée d'un refroidissement du gaz et d'une compression de telle manière que la proportion de vapeur d'eau dans le gaz d'échappement soit éliminée au préalable,
    et en ce que la fraction gazeuse contenant essentiellement de l'azote, obtenue lors de la séparation, est produite avec une pureté supérieure à 95% et est utilisée dans le même four de traitement thermique, également comme gaz protecteur,
    ce gaz protecteur d'azote étant introduit dans le four à distance par rapport au gaz produit généré, et, étant introduit en particulier lors de la présence de plusieurs zones de four, comme gaz protecteur dans la zone d'entrée et, le cas échéant, dans la zone de sortie du four.

2.  Procédé selon la revendication 1, caractérisé en ce que la séparation des gaz est réglée de telle manière que la fraction gazeuse contenant essentiellement de l'azote présente au moins 98% d'azote, le reste étant essentiellement du $CO_2$, et que la fraction gazeuse riche en dioxyde de carbone présente au moins 25% de dioxyde de carbone et en ce qu'on produit avec cette dernière fraction, par transformation avec un gaz d'hydrocarbures, une atmosphère particulièrement appropriée pour un recuit neutre sur le plan de la carburation.

3.  Procédé selon l'une quelconque des revendications 1 à 2, caractérisé en ce que la séparation d'eau du gaz d'échappement est obtenue par un refroidissement correspondant au moyen d'un échange de chaleur indirect avec séparation de gouttelettes et/ou par un ou plusieurs compresseurs réglés de manière correspondante, disposés en amont de l'installation de séparation de gaz par membrane,

4. Procédé selon l'une quelconque des revendications 1 à 3, caractérisé en ce qu'on augmente la proportion en $CO_2$ dans la fraction gazeuse riche en dioxyde de carbone au moyen d'une source externe en dioxyde de carbone avant la transformation et en ce qu'on obtient ainsi de meilleures conditions de transformation,

5. Procédé selon l'une quelconque des revendications 1 à 4, caractérisé en ce que la fraction gazeuse riche en $CO_2$ est transformée avec le gaz d'hydrocarbures dans une cornue à catalyseur disposée dans le four de traitement thermique et en ce que la cornue est maintenue à une température supérieure à 800°C, de préférence autour de 1000°C, la cornue étant dans ce but de préférence chauffée en supplément.

6. Installation de traitement thermique avec un four (D) présentant une chambre de traitement (3, 5, 8) avec une zone de chauffage et un ou plusieurs dispositifs de chauffage ainsi qu'une alimentation en gaz protecteur, qui comprend une installation de séparation de gaz (1) et un agrégat de transformation (2) pour le $CO_2$ avec un gaz d'hydrocarbures,

caractérisée en ce que la sortie de gaz d'échappement des installations de chauffage (H) est raccordée via une ou plusieurs installations de séparation d'eau (7) à une installation de séparation de gaz par membrane (1),
en ce que la sortie de perméat (P) de l'installation de séparation de gaz, qui fournit la fraction gazeuse riche en $CO_2$, est raccordée à l'agrégat de transformation (2) et en ce que l'agrégat de transformation est en outre raccordé à une source de gaz d'hydrocarbures ($C_nH_m$) et dispose de mesures pour le transport ultérieur du gaz produit vers la chambre de traitement (3, 5, 8) de l'installation, et
en ce que d'autre part la sortie de rétentat (R) de l'installation de séparation de gaz par membrane, qui fournit la fraction de gaz contenant essentiellement de l'azote, est également raccordée à la chambre de traitement (3, 5, 8) de l'installation, l'introduction dans la chambre de traitement étant réalisée à distance par rapport à l'introduction du gaz produit.

7. Installation de traitement thermique selon la revendication 6, avec un four comprenant plusieurs chambres ou zones, caractérisée en ce que la sortie de rétentat (R) de l'installation de séparation de gaz par membrane est raccordée à la zone ou chambre d'entrée et le cas échéant de sortie (3, 8) du four alors que la sortie de l'agrégat de transformation (2) est raccordée à la chambre principale ou la zone de chauffage (5) du four.

8. Installation de traitement thermique selon la revendication 6 ou 7, caractérisée en ce que l'agrégat de transformation (2) est une cornue à catalyseur qui est disposée dans la zone de chauffage (5) du four et qui dispose d'un chauffage supplémentaire.